(19) **Europäisches Patentamt**
**European Patent Office**
**Office européen des brevets**

(11) **EP 3 685 025 B1**

(12) **EUROPÄISCHE PATENTSCHRIFT**

(45) Veröffentlichungstag und Bekanntmachung des Hinweises auf die Patenterteilung:
**02.03.2022 Patentblatt 2022/09**

(21) Anmeldenummer: **18779262.7**

(22) Anmeldetag: **17.09.2018**

(51) Internationale Patentklassifikation (IPC):
**F01N 3/20** *(2006.01)* **F01N 3/28** *(2006.01)*
**H05B 3/06** *(2006.01)* **H05B 3/44** *(2006.01)*

(52) Gemeinsame Patentklassifikation (CPC):
**F01N 3/2026; F01N 3/2013; F01N 3/28; F01N 3/281; H05B 3/06; H05B 3/44;** F01N 2240/16; F01N 2330/02; H05B 2214/03; Y02T 10/12

(86) Internationale Anmeldenummer:
**PCT/EP2018/075044**

(87) Internationale Veröffentlichungsnummer:
**WO 2019/053250 (21.03.2019 Gazette 2019/12)**

(54) **ELEKTRISCH BEHEIZBARE HEIZSCHEIBE FÜR DIE ABGASNACHBEHANDLUNG**

ELECTRICALLY HEATABLE HEATING DISK FOR EXHAUST GAS AFTERTREATMENT

PLAQUE CHAUFFANTE POUR ÊTRE CHAUFFÉE ÉLECTRIQUEMENT POUR POST-TRAITEMENT DE GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2017 DE 102017216470**

(43) Veröffentlichungstag der Anmeldung:
**29.07.2020 Patentblatt 2020/31**

(73) Patentinhaber: **Vitesco Technologies GmbH 93055 Regensburg (DE)**

(72) Erfinder:
• **PABST, Christoph**
 **49326 Melle (DE)**

• **HIRTH, Peter**
 **51503 Rösrath (DE)**
• **KURTH, Ferdi**
 **53894 Mechernich (DE)**
• **HORT, Lukas**
 **51429 Bergisch Gladbach (DE)**

(74) Vertreter: **Vitesco Technologies Postfach 12 02 82019 Taufkirchen (DE)**

(56) Entgegenhaltungen:
EP-A1- 0 490 222    EP-A1- 0 553 942
EP-A1- 2 175 115    DE-A1- 4 306 482
US-A- 5 140 812    US-A- 5 546 746

**Beschreibung**

Technisches Gebiet

Die Erfindung betrifft eine Heizscheibe zur Aufheizung eines Abgasstromes und/oder einer Komponente zur Abgasnachbehandlung, mit einem Wabenkörper der aus einer Mehrzahl von aufeinandergestapelten glatten und gewellten Metalllagen aufgewickelt ist, mit einem Trägermantel, in welchem der Wabenkörper aufgenommen ist, und mit einer elektrischen Kontaktierung, die durch den Trägermantel hindurchgeführt ist und über die der Wabenkörper mit einer Stromquelle verbindbar ist. Außerdem betrifft die Erfindung ein Verfahren zur Herstellung der Heizscheibe.

Stand der Technik

Im Stand der Technik sind Heizscheiben bekannt, die zur zusätzlichen Aufheizung von Komponenten zur Abgasnachbehandlung eingesetzt werden. Ziel dieser Aufheizung ist es insbesondere schneller in einen für die Nachbehandlung des Abgases günstigen Temperaturbereich zu kommen, um die gesetzlich vorgeschriebenen Werte für die Abgasnachbehandlung einhalten zu können.

Die Heizscheiben sind hierzu, ähnlich den Wabenkörpern der restlichen Abgasnachbehandlungskomponenten, beispielsweise aus einem Lagenstapel aus glatten und gewellten Metalllagen erstellt, die in einem Prozessschritt aufgewickelt werden, um eine Scheibe mit einer entsprechenden Formgebung zu erhalten.

Die Erwärmung geschieht unter Ausnutzung des Ohmschen Widerstands durch das Einleiten eines Stromes in die Heizscheibe.

Die EP 0 490 222 A1 offenbart eine Struktur für einen elektrisch beheizbaren Katalysator. Der Wabenkörper ist aus glatten und gewellten Metallstreifen gebildet, die mit einem elektrisch leitfähigen Kern verbunden sind. Der Wabenkörper weist darüber hinaus Streifen von Lötmaterial auf, welche zwischen den Metallstreifen angeordnet sind und mit den Metallstreifen aufgewickelt sind. Der Wabenkörper ist in einem Gehäuse angeordnet und mit Isolationsmaterial umgeben.

Insbesondere nachteilig an den im Stand der Technik bekannten Vorrichtungen ist, dass der eingeleitete Strom nicht in ausreichendem Maße gleichverteilt wird, wodurch es zu einer inhomogenen Aufheizung der Heizscheibe kommt. Die bisher angewendeten Maßnahmen um eine inhomogene Aufheizung zu vermeiden sind insbesondere nachteilig, da sie fertigungstechnisch schlecht umzusetzen sind oder mit hohen technischem Aufwand und hohen Kosten verbunden sind.

Darstellung der Erfindung, Aufgabe, Lösung, Vorteile

Daher ist es die Aufgabe der vorliegenden Erfindung eine elektrische Heizscheibe zur Beheizung einer Komponente zur Abgasnachbehandlung zu schaffen, die eine optimierte Stromeinleitung aufweist und somit eine homogene Aufheizung der Heizscheibe gewährleistet. Darüber hinaus ist es die Aufgabe der Erfindung ein Verfahren zu schaffen, welches zur Herstellung einer erfindungsgemäßen Heizscheibe verwendet werden kann.

Die Aufgabe hinsichtlich der Heizscheibe wird durch eine Heizscheibe mit den Merkmalen von Anspruch 1 gelöst.

Ein Ausführungsbeispiel der Erfindung betrifft eine Heizscheibe zur Aufheizung eines Abgasstromes und/oder einer Komponente zur Abgasnachbehandlung, mit einem Wabenkörper der aus einer Mehrzahl von aufeinandergestapelten glatten und gewellten Metalllagen aufgewickelt ist, mit einem Trägermantel, in welchem der Wabenkörper aufgenommen ist, und mit einer elektrischen Kontaktierung, die durch den Trägermantel hindurchgeführt ist und über die der Wabenkörper mit einer Stromquelle verbindbar ist, wobei die elektrische Kontaktierung in dem vom Trägermantel umschlossenen Bereich einen sich in Umfangsrichtung des Trägermantels erstreckenden Kontaktstreifen aufweist, wobei zwischen dem Trägermantel und dem Kontaktstreifen ein Isolationsbereich ausgebildet ist, wobei eine Mehrzahl von zueinander elektrisch isolierten Lagenstapeln, die jeweils aus einer Mehrzahl von glatten Metalllagen und gewellten Metalllagen gebildet sind und die direkt benachbart zueinander angeordnet sind, elektrisch leitend mit dem Kontaktsteifen verbunden sind.

Ein solcher Aufbau ist besonders vorteilhaft, da über einen gemeinsamen Kontaktstreifen eine Mehrzahl von Lagenstapeln gleichmäßig mit einem elektrischen Strom beaufschlagt werden kann. Der Kontaktstreifen ist hierbei insbesondere als Metallstreifen ausgebildet, der durch eine durch den Trägermantel hindurchgeführte elektrische Kontaktierung mit einer Stromquelle verbunden werden kann.

Der Kontaktstreifen ist somit Teil der Leitungsstrecke für den elektrischen Strom. Der Kontaktstreifen ist daher vorzugsweise gegenüber dem Trägermantel elektrisch isoliert, um ein Fließen des Stroms im Trägermantel selbst zu verhindern.

Besonders vorteilhaft ist, dass der Kontaktstreifen gleichzeitig mit mehreren zueinander elektrisch isolierten Lagenstapeln in elektrisch leitendem Kontakt steht, da dadurch erreicht werden kann, dass mit nur einer einzigen elektrischen Durchführung durch den Trägermantel eine gleichmäßige Stromeinleitung in eine Mehrzahl von Lagenstapeln erreicht werden kann. Idealerweise besteht eine elektrisch leitfähige Verbindung zwischen dem Kontaktstreifen und allen Lagenstapeln der Heizscheibe.

Besonders vorteilhaft ist es, wenn die Lagenstapel zueinander elektrisch isoliert sind. Die elektrische Isolation der Lagenstapel zueinander verhindert, dass der Strom nach dem Prinzip des geringsten elektrischen Widerstands sich einen bevorzugten kurzen Leitungsweg durch die Lagenstapel sucht und es aufgrund dessen zu lokalen Hot-Spots kommen kann und somit zu einer ungleichmäßigen Temperaturverteilung über die Heizscheibe hinweg. Insbesondere bei hohen Strömen kann es bei einer ungewollten Ausbildung von Hot-Spots auch zu Beschädigungen der Heizscheibe und somit zum Ausfall der Heizscheibe kommen. Dies soll durch die elektrische Isolation zueinander vermieden werden.

Zum Zwecke der elektrischen Isolation kann ein Luftspalt zwischen den einzelnen Lagenstapeln vorgesehen werden. Alternativ dazu kann auch eine Isolationsschicht beispielsweise aus einem keramischen Material vorgesehen werden.

Erfindungsgemäß weist der Trägermantel eine radial nach außen gerichtete Ausbuchtung auf, die eine Aufnahme für den sich in Umfangsrichtung erstreckenden Kontaktstreifen bildet.

Eine Ausbuchtung ist besonders vorteilhaft, um im von dem Trägermantel eingeschlossenen Bereich einen Aufnahmebereich für den Isolationsbereich zwischen dem Kontaktstreifen und dem Trägermantel zu erzeugen. Dies hat zum Vorteil, dass der Kontaktstreifen nicht in den von dem restlichen Trägermantel gebildeten Querschnitt untergebracht werden muss, wodurch die aktive Heizfläche, die im Betrieb umströmt werden könnte, verkleinert werden würde. Es ist das Ziel die Querschnittsfläche des Trägermantels möglichst vollständig mit den aufgewickelten Lagenstapeln auszufüllen, um eine möglichst große Zahl an durchströmbaren Kanälen auszubilden und möglichst wenige Absätze und scharfkantige Übergänge auszubilden. Außerdem ist es aus produktionstechnischer Sicht einfacher eine Querschnittsfläche mit den Lagenstapeln auszufüllen, wenn sie einen stetigen Randbereich aufweist und nicht zusätzliche Elemente, wie insbesondere den Kontaktstreifen aufgenommen werden müssen.

Ein bevorzugtes Ausführungsbeispiel ist dadurch gekennzeichnet, dass der Isolationsbereich durch einen Luftspalt gebildet ist, oder dass der Isolationsbereich durch eine keramische Isolation gebildet ist.

Besonders bevorzugt wird der Isolationsbereich durch eine keramische Materialschicht gebildet. Diese kann direkt in die Ausbuchtung eingebracht werden oder auf den Kontaktstreifen aufgetragen werden. An die keramische Isolation kann der Kontaktstreifen, der bevorzugt aus einem elektrisch leitfähigen Metall gebildet ist, angebunden werden. Hierzu ist insbesondere der Einsatz von einem Aktivlot vorteilhaft und/oder die vorhergehende Metallisierung der keramischen Isolationsschicht, wodurch der Kontaktstreifen beispielsweise auch angelötet oder angeschweißt werden kann. Die Keramikschicht fungiert in einem solchen Aufbau gleichzeitig auch als mechanische Abstützung des Kontaktstreifens gegenüber dem Trägermantel.

Alternativ kann ein Luftspalt zwischen dem Kontaktstreifen und dem Trägermantel vorgesehen werden, wobei hierbei zusätzlich Mittel zur Stabilisierung des Kontaktstreifens im Trägermantel vorgesehen werden müssen und auch Maßnahmen zur Verhinderung einer unbeabsichtigten Kontaktierung des Trägermantels aufgrund von Erschütterungen oder anderen äußeren Störeinflüssen stattfinden.

Auch ist es zu bevorzugen, wenn der Kontaktstreifen elektrisch leitend mit bis zu drei voneinander ansonsten elektrisch isolierten Lagenstapeln verbunden ist. Die Verbindung des Kontaktstreifens mit einer Mehrzahl von einzelnen Lagenstapeln ist vorteilhaft, da die Stromeinleitung so wesentlich genauer erfolgen kann und sichergestellt wird, dass über die gesamte Fläche der Heizscheibe eine homogenere Stromverteilung erreicht wird.

Je höher die Anzahl der parallel in einem Stapel angeordneten Lagen ist, umso mehr Möglichkeiten bieten sich für den den Stapel durchströmenden Strom sich entlang Bereichen reduziertem Widerstands auszubreiten und somit Bereiche zu schaffen, die überdurchschnittlich stark durchströmt werden, und gleichzeitig Bereiche zu schaffen, die unterdurchschnittlich stark durchströmt werden. Hieraus kann eine starke Inhomogenität in der Temperaturverteilung resultieren, wodurch die Heizleistung beziehungsweise die gesamte Leistungsfähigkeit der Heizscheibe reduziert wird. Außerdem wird die Dauerhaltbarkeit durch die inhomogene Temperaturverteilung und die daraus resultierenden Spannungen im Material negativ beeinträchtigt.

Es ist daher vorteilhaft, wenn der Lagenstapel in möglichst viele voneinander isolierte Teilstapel unterteilt ist. Je mehr Lagen der Gesamtstapel, der aus der Summe der Teilstapel gebildet ist, aufweist, umso mehr Teilstapel sind aus funktioneller Sicht wünschenswert. Aus praktischen Erprobungen hat sich ergeben, dass Teilstapel mit nicht mehr als 5 bis 7 Lagen eine vorteilhafte Gleichverteilung erzeugen. Bei Heizscheiben mit einem besonders großen Durchmesser sind Stapel von bis zu 20 Gesamtlagen, wobei jede Gesamtlage aus jeweils einer Glattlage und einer Welllage besteht, möglich. Daraus ergibt sich eine besonders geeignete Teilung von 2 bis 3 Teilstapeln. Ideal ist die Aufteilung in einen Stapel bei 3 bis 7 Lagen, in zwei Stapel bei 8 bis 14 Lagen und in 3 Stapel bei über 15 Lagen.

Darüber hinaus ist es vorteilhaft, wenn die bis zu fünf, vorzugsweise drei, Lagenstapel jeweils bis zu sieben gewellte Metalllagen aufweisen und bis zu 8 glatte Metalllagen aufweisen.

Weiterhin ist es vorteilhaft, wenn der Kontaktstreifen sich in Umfangsrichtung des Trägermantels erstreckt, wobei ein Teilbereich des Kontaktstreifens zur Mittelachse des Wabenkörpers abgewinkelt ist. Dies ist vorteilhaft, um den Abstand zwischen dem Kontaktstreifen und dem Trägermantel derart zu vergrößern, dass auch eine Bewegung des Kontaktstreifens aufgrund von Erschütterungen, Wärmedehnungen oder Ähnlichem nicht zu einem elektrisch leitenden Kontakt zwischen Kontaktstreifen und Trägermantel führt.

Auch ist es zweckmäßig, wenn der abgewinkelte Bereich des Kontaktstreifens derart dimensioniert ist, dass die Resonanzfrequenz des abgewinkelten Bereichs mit Werten oberhalb von 2500 Hz in einem Bereich außerhalb der Schwingungsfrequenzen des Abgassystems liegt.

Der Kontaktstreifen ist zur Aufnahme des gesamten durch die Heizscheibe strömbaren Stroms vorgesehen und muss daher notwendigerweise einen Querschnitt aufweisen, der gleich oder größer der Summe ist, die sich aus einer Multiplikation der Dicken mit den Breiten der die Metalllagen bildenden Folien ergibt. Die Dicke bemisst sich inklusive eines Zuschlags zur Kompensation der verminderten Kühlflächen nach:

$$Dicke_{Kontaktstreifens} = D_f \times (n_{Welllagen} + 1) \times 300\ \mu m$$

Wobei der Korrekturfaktor $D_f$ zwischen 0,6 und 1,5 liegen kann.

Somit ist der Kontaktstreifen derart bemessen, dass er Schwingungsbelastungen von beispielsweise 2500 Hz zerstörungsfrei widerstehen kann.

Bevorzugt wird ein Werkstoff mit einem niedrigen spezifischen Widerstand, vorzugsweise kleiner als 1,5 $\Omega \times mm^2/m$ verwendet, um in diesem Bereich möglichst wenig Wärme zu erzeugen.

Darüber hinaus ist es vorteilhaft, wenn die Durchführung für die elektrische Kontaktierung durch den Trägermantel einen von außen nach innen sich konisch verjüngenden Querschnitt aufweist. Ein von außen nach innen sich konisch verjüngender Querschnitt ist vorteilhaft, da durch das Einpressen des Innenleiters in die Durchführung ein fester sicherer Halt erzeugt werden kann. Mit der Erhöhung der Einpresskraft und somit dem Vorschub des Innenleiters kann so die Fixierung des Innenleiters in der Durchführung beeinflusst werden.

Weiterhin ist es zweckmäßig, wenn die elektrische Kontaktierung durch einen Innenleiter gebildet ist, der in eine den Trägermantel durchdringende Aufnahmehülse eingesetzt ist, wobei der Innenleiter von der Aufnahmehülse durch eine elektrisch isolierende Schicht beabstandet ist. Dies ist vorteilhaft, um einen elektrische Kontaktierung des Kontaktstreifens im Inneren zu gewährleisten und gleichzeitig eine elektrische Kontaktierung zwischen dem Innenleiter und dem Trägermantel, in welchem die aufnahmehülse gehalten ist, zu vermeiden.

Auch ist es zu bevorzugen, wenn der Innenleiter und/oder die Aufnahmehülse einen sich konisch verjüngenden Querschnitt aufweisen. Dies ist besonders vorteilhaft, um ein definiertes Einpressen des Innenleiters in die Aufnahmehülse zu ermöglichen. Abhängig von der Dimensionierung des Innenleiters und der Aufnahmehülse kann bei einer gegebenen Einpresskraft eine exakt definierte Einführtiefe für den Innenleiter sichergestellt werden.

Darüber hinaus ist es vorteilhaft, wenn der Kontaktstreifen mit den die elektrische Kontaktierung bildenden und durch den Trägermantel geführten Elementen verbunden ist und durch diese Elemente relativ zum Trägermantel positioniert ist. Dies ist einerseits vorteilhaft, um eine Sicherung für den Innenleiter zu erzeugen, um ein versehentliches Lösen des Innenleiters zu vermeiden, andererseits ist dies vorteilhaft, um den Kontaktstreifen auf einfach Art sicher elektrisch zu kontaktieren und ihn im Inneren des Trägermantels zu fixieren.

Auch ist es zweckmäßig, wenn der Kontaktstreifen mittels einer Metall/Keramik-Lötverbindung mechanisch fest jedoch elektrisch isolierend zur Isolationsschicht mit dem Trägermantel verbunden ist.

Die Aufgabe hinsichtlich des Verfahrens wird durch ein Verfahren mit den Merkmalen von Anspruch 14 gelöst.

Ein Ausführungsbeispiel der Erfindung betrifft ein Verfahren zur Herstellung eines Katalysators mit einer Heizscheibe, wobei die nachfolgenden Schritte Teil des Verfahrens sind:

- Einformen einer Ausbuchtung in den Trägermantel,
- Beschichtung der Ausbuchtung mit einer keramischen Isolationsschicht,
- Einbringen des Kontaktstreifens in den von dem Trägermantel umschlossenen Bereich,
- Verlöten der Lagenstapel mit dem Kontaktstreifen,
- Verlöten oder Verschweißen der elektrischen Kontaktierung mit dem Kontaktstreifen.

Ein solches Verfahren ist besonders vorteilhaft, um einen Aufnahmebereich im Inneren des Trägermantels für den Kontaktstreifen und die elektrisch isolierende Schicht zu schaffen, ohne dabei die durch den Trägermantel vorgegeben Querschnittsfläche mit anderen Elemente als den aufgewickelten Lagenstapeln ausfüllen zu müssen. Bevorzugt wird die gesamte durch den Trägermantel gebildete Querschnittsfläche mit den aufgewickelten Lagenstapeln ausgefüllt, um eine möglichst große durchströmbare Fläche zu erhalten und so einen möglichst guten Wärmeübergang von der Heizscheibe auf den Abgasstrom zu erhalten.

Weiterhin ist es vorteilhaft, wenn die Isolationssicht mit einer Metallisierung beaufschlagt wird. Eine Metallisierung der Isolationsschicht ist vorteilhaft, um unter Verwendung gewöhnlicher Verfahren, wie dem Schweißen oder Löten, eine Anbindung des Kontaktstreifens an die Isolationssicht erreichen zu können.

Auch ist es zweckmäßig, wenn der Innenleiter und die Aufnahmehülse am Trägermantel miteinander verpresst werden. Dies ist vorteilhaft, um sicherzustellen, dass der Innenleiter und die Aufnahmehülse fest miteinander verbunden sind und sich die Elemente nicht ungewollt voneinander lösen.

Vorteilhafte Weiterbildungen der vorliegenden Erfindung sind in den Unteransprüchen und in der nachfolgenden Figurenbeschreibung beschrieben.

Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:

Fig. 1     eine schematische Schnittansicht durch eine erfindungsgemäße Heizscheibe mit einer Durchführung für eine elektrische Kontaktierung und einem Kontaktstreifen zur Anbindung mehrerer Lagenstapel,

Fig. 2     eine Schnittansicht durch eine Durchführung mit einem Innenleiter, der zur Einleitung eines elektrischen Stroms in die Lagenstapel genutzt wird, und

Fig. 3     eine weitere schematische Schnittansicht durch eine Heizscheibe, wobei der Kontaktstreifen einen abgewinkelten Bereich aufweist.

Bevorzugte Ausführung der Erfindung

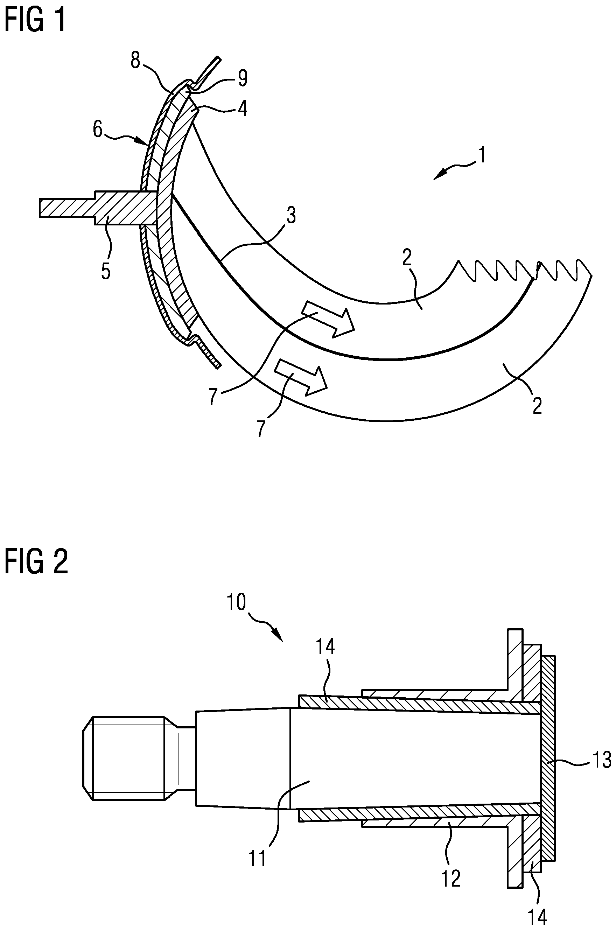

Die Figur 1 zeigt eine Schnittansicht durch eine Heizscheibe 1. Die Heizscheibe 1 ist aus einer Mehrzahl von Lagenstapeln 2 gebildet, die wiederrum aus aufeinander gestapelten glatten Metalllagen und gewellten Metalllagen gebildet sind. Die Lagenstapel 2 sind zueinander durch einen Luftspalt 3 elektrisch isoliert, so dass der Strom nicht von einem Lagenstapel 2 auf den nächsten überströmen kann.

Die Lagenstapel 2 sind endseitig an einen Kontaktstreifen 4 angebunden. Der Kontaktstreifen 4 ist seinerseits mit einem in Figur 1 nicht gezeigten elektrischen Leiter verbunden, der durch die Durchführung 5 in die Heizscheibe 1 hinein geführt wird.

Die aufgewickelten Lagenstapel 2 und der Kontaktstreifen 4 sind innerhalb eines Trägermantels 6 angeordnet, der die durch die Lagenstapel 2 gebildete Heizscheibe 1 umfasst und ihr die notwendige Stabilität gibt.

Der elektrische Strom wird durch die Durchführung 5 auf den Kontaktstreifen 4 übertragen und strömt entlang der Pfeile 7 durch die Lagenstapel 2. Im Ausführungsbeispiel der Figur 1 sind zwei Lagenstapel 2 mit dem Kontaktstreifen 4 elektrisch leitend verbunden. Die beiden Lagenstapel 2 werden daher gleichmäßig mit dem durch die Durchführung 5 strömenden Strom beaufschlagt. Durch die elektrische Isolation der Lagenstapel 2 zueinander ist weiterhin sichergestellt, dass der Strom jeweils nur entlang der jeweiligen Lagenstapel 2 fliest und nicht unkontrolliert in benachbarte Lagenstapel 2 überströmt. Dies ist insbesondere wichtig um sicherzustellen, dass sich keine bevorzugten und verkürzten Stromflusswege einstellen, die zu einer inhomogenen Temperaturverteilung führen können und somit die Effizienz der Heizscheibe 1 negativ beeinträchtigen.

Der Trägermantel 6 weist eine radial nach außen gerichtete Ausbuchtung 8 auf. Diese Ausbuchtung 8 dient der Aufnahme des Kontaktstreifens 4 und gegebenenfalls eines Isolationsbereichs 9. Die Ausbuchtung 8 ist bevorzugt dergestalt, dass der Kontaktstreifen 4 vollständig in diese aufgenommen werden kann und somit die gesamte von dem Trägermantel 6 eingeschlossene Querschnittsfläche für die aufgewickelten Lagenstapel 2 beziehungsweise die daraus gebildete Heizscheibe 1 genutzt werden kann.

Der Isolationsbereich 8 kann je nach Ausführung durch eine Luftschicht gebildet sein, in dem der Kontaktstreifen 4 ausreichend beabstandet zum Trägermantel 6 angeordnet ist, oder durch eine keramische Materialschicht. Bevorzugt ist der Kontaktstreifen 4 mit der keramischen Isolationsschicht gegenüber dem Trägermantel 6 abgestützt und gegebenenfalls auch darüber mit ihm verbunden. Dies erhöht die Festigkeit und die Dauerhaltbarkeit der Heizscheibe.

Die Durchführung 5 ist mit dem Trägermantel 6 vorteilhafterweise verschweißt oder verlötet, um einen dauerhaften Halt sicherzustellen.

Die Figur 2 zeigt eine Schnittansicht durch eine Durchführung 10, wie sie in Figur 1 bereits mit dem Bezugszeichen 5 angedeutet wurde.

Die Durchführung 10 weist einen Innenleiter 11 auf, der durch eine mit dem Trägermantel verbundene Aufnahmehülse 12 bis an den Kontaktstreifen 13 führt. Zwischen der Aufnahmehülse 12 und dem Innenleiter 11 ist eine Isolationsschicht 14 angeordnet, die eine elektrische Isolation zum Trägermantel schafft.

Der Kontaktstreifen 13 und der Innenleiter 11 sind vorzugsweise miteinander verschweißt oder verlötet.

Das Ausführungsbeispiel der Figur 2 zeigt einen Innenleiter 11 und eine Aufnahmehülse 12, die jeweils einen sich nach innen konisch verjüngenden Querschnitt aufweist. Durch das Einschieben des Innenleiters 11 in die Aufnahmehülse 12 wird somit eine Pressung zwischen dem Innenleiter 11 und der Aufnahmehülse 12 erzeugt.

Durch eine solche Gestaltung der Aufnahmehülse 12 und des Innenleiters 11 wird außerdem sichergestellt, dass der Kontaktstreifen 13 sicher in seiner Position gehalten wird, da ein nachrutschen des Innenleiters 11 in den Innenbereich des Trägermantels aufgrund der konischen Gestaltung ausgeschlossen ist.

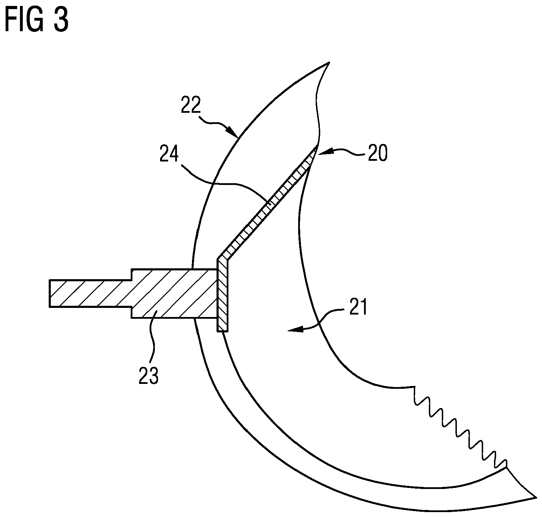

Die Figur 3 zeigt eine alternative Ausgestaltung des Kontaktstreifens 20 in einem ansonsten mit der Figur 1 übereinstimmenden Aufbau. In Figur 3 ist der Einfachheit halber der Kontaktstreifen 20 lediglich mit einem Lagenstapel 21 verbunden. Die Anbindung mehrerer zueinander elektrisch isolierter Lagenstapel ist jedoch problemlos möglich.

Der Kontaktstreifen 20 weist einen abgewinkelten Bereich 24 auf, der radial nach innen vom Trägermantel 22 weggebogen ist. Dies ist vorteilhaft, weil somit der Abstand zwischen dem Trägermantel 22 und dem Kontaktstreifen 20 erhöht wird, wodurch eine verbesserte elektrische Isolation erreicht wird, auch wenn keine elektrisch isolierende Schicht, wie beispielsweise eine keramische Schicht, vorgesehen ist.

Der Kontaktstreifen 20 und insbesondere der abgewinkelte Bereich 24 kann hinsichtlich der Materialauswahl und der Dimensionierung insbesondere derart ausgelegt werden, dass die Eigenfrequenz des Kontaktstreifens 20 außerhalb des Frequenzspektrums der Schwingungen in einem Abgassystem eines Kraftfahrzeugs liegt, um unerwünscht Resonanzphänomene zu vermeiden.

Die unterschiedlichen Merkmale der einzelnen Ausführungsbeispiele können auch untereinander kombiniert werden. Die Ausführungsbeispiele der Figuren 1 bis 3 weisen insbesondere keinen beschränkenden Charakter auf und dienen der Verdeutlichung des Erfindungsgedankens.


**Patentansprüche**

1. Heizscheibe (1) zur Aufheizung eines Abgasstromes und/oder einer Komponente zur Abgasnachbehandlung, mit einem Wabenkörper der aus einer Mehrzahl von aufeinandergestapelten glatten und gewellten Metalllagen aufgewickelt ist, mit einem Trägermantel (6, 22), in welchem der Wabenkörper aufgenommen ist, und mit einer elektrischen Kontaktierung, die durch den Trägermantel (6, 22) hindurchgeführt ist und über die der Wabenkörper mit einer Stromquelle verbindbar ist, wobei die elektrische Kontaktierung in dem vom Trägermantel (6, 22) umschlossenen Bereich einen sich in Umfangsrichtung des Trägermantels (6, 22) erstreckenden Kontaktstreifen (4, 20) aufweist, wobei zwischen dem Trägermantel (6, 22) und dem Kontaktstreifen (4, 20) ein Isolationsbereich (9) ausgebildet ist, wobei eine Mehrzahl von zueinander elektrisch isolierten Lagenstapeln (2, 21) , die jeweils aus einer Mehrzahl von glatten Metalllagen und gewellten Metalllagen gebildet sind und die direkt benachbart zueinander angeordnet sind, elektrisch leitend mit dem Kontaktsteifen (4, 20) verbunden sind, **dadurch gekennzeichnet, dass** der Trägermantel (6) eine radial nach außen gerichtete Ausbuchtung (8) aufweist, die eine Aufnahme für den sich in Umfangsrichtung erstreckenden Kontaktstreifen (4) bildet.

2. Heizscheibe (1) nach Anspruch 1, **dadurch gekennzeichnet, dass** die Lagenstapel (2, 21) zueinander elektrisch isoliert sind.

3. Heizscheibe (1) nach einem der vorhergehenden Ansprüche, **dadurch gekennzeichnet, dass** der Isolationsbereich durch einen Luftspalt gebildet ist, oder dass der Isolationsbereich (9) durch eine keramische Isolation gebildet ist.

4. Heizscheibe (1) nach einem der vorhergehenden Ansprüche, **dadurch gekennzeichnet, dass** der Kontaktstreifen (4, 20) elektrisch leitend mit bis zu drei voneinander ansonsten elektrisch isolierten Lagenstapeln (2, 21) verbunden ist.

5. Heizscheibe (1) nach Anspruch 4, **dadurch gekennzeichnet, dass** die bis zu fünf, vorzugsweise drei, Lagenstapel (2, 21) jeweils bis zu sieben gewellte Metalllagen aufweisen und bis zu 8 glatte Metalllagen aufweisen.

6. Heizscheibe (1) nach einem der vorhergehenden Ansprüche, **dadurch gekennzeichnet, dass** der Kontaktstreifen (20) sich in Umfangsrichtung des Trägermantels (22) erstreckt, wobei ein Teilbereich (24) des Kontaktstreifen (20) zur Mittelachse des Wabenkörpers abgewinkelt ist.

7. Heizscheibe (1) nach Anspruch 6, **dadurch gekennzeichnet, dass** der abgewinkelte Bereich (24) des Kontaktstreifens (20) derart dimensioniert ist, dass die Resonanzfrequenz des abgewinkelten Bereichs (24) mit Werten oberhalb von 2500 Hz in einem Bereich außerhalb der Schwingungsfrequenzen des Abgassystems liegt.

**8.** Heizscheibe (1) nach einem der vorhergehenden Ansprüche, **dadurch gekennzeichnet, dass** die Durchführung (5, 10) für die elektrische Kontaktierung durch den Trägermantel (6) einen von außen nach innen sich konisch verjüngenden Querschnitt aufweist.

**9.** Heizscheibe (1) nach Anspruch 8, **dadurch gekennzeichnet, dass** die elektrische Kontaktierung durch einen Innenleiter (11) gebildet ist, der in eine den Trägermantel durchdringende Aufnahmehülse (12) eingesetzt ist, wobei der Innenleiter (11) von der Aufnahmehülse (12) durch eine elektrisch isolierende Schicht (14) beabstandet ist.

**10.** Heizscheibe (1) nach einem der vorhergehenden Ansprüche 8 oder 9, **dadurch gekennzeichnet, dass** der Innenleiter (11) und/oder die Aufnahmehülse (12) einen sich konisch verjüngenden Querschnitt aufweisen.

**11.** Heizscheibe (1) nach einem der vorhergehenden Ansprüche, **dadurch gekennzeichnet, dass** der Kontaktstreifen (4, 20) mit den die elektrische Kontaktierung bildenden und durch den Trägermantel (6, 22) geführten Elementen verbunden ist und durch diese Elemente relativ zum Trägermantel (6, 22) positioniert ist.

**12.** Heizscheibe (1) nach eine der vorhergehenden Ansprüche, **dadurch gekennzeichnet, dass** der Kontaktstreifen mittels einer Metall/Keramik-Lötverbindung mechanisch fest jedoch elektrisch isolierend zur Isolationsschicht mit dem Trägermantel verbunden ist.

**13.** Verfahren zur Herstellung eines Katalysators mit einer Heizscheibe (1) nach den vorhergehenden Ansprüchen 1 bis 12, **dadurch gekennzeichnet, dass** die nachfolgenden Schritte Teil des Verfahrens sind:

- Einformen einer Ausbuchtung (8) in den Trägermantel (6),
- Beschichtung der Ausbuchtung (8) mit einer keramischen Isolationsschicht (9),
- Einbringen des Kontaktstreifens (4) in den von dem Trägermantel (6) umschlossenen Bereich,
- Verlöten der Lagenstapel (2) mit dem Kontaktstreifen (4),
- Verlöten oder Verschweißen der elektrischen Kontaktierung mit dem Kontaktstreifen (4).

**14.** Verfahren nach Anspruch 13, **dadurch gekennzeichnet, dass** die Isolationssicht (9) mit einer Metallisierung beaufschlagt wird.

**15.** Verfahren nach einem der vorhergehenden Ansprüche 13 oder 14, **dadurch gekennzeichnet, dass** der Innenleiter (11) und die Aufnahmehülse (12) am Trägermantel miteinander verpresst werden.

**Claims**

**1.** Heating disk (1) for heating up a stream of exhaust gas and/or a component for exhaust gas aftertreatment, with a honeycomb body, which is wound from a plurality of smooth and corrugated metal layers stacked one on top of the other, with a carrier shell (6, 22), in which the honeycomb body is received, and with an electrical contact structure, which is fed through the carrier shell (6, 22) and via which the honeycomb body can be connected to a current source, wherein, in the region enclosed by the carrier shell (6, 22), the electrical contact structure has a contact strip (4, 20) extending in the circumferential direction of the carrier shell (6, 22), wherein an insulating region (9) is formed between the carrier shell (6, 22) and the contact strip (4, 20), wherein a plurality of stacks of layers (2, 21) electrically insulated from one another, which are each formed from a plurality of smooth metal layers and corrugated metal layers and which are arranged directly adjacent to one another, are connected electrically conductively to the contact strip (4, 20), **characterized in that** the carrier shell (6) has a radially outwardly directed bulge (8), which forms a receptacle for the contact strip (4) extending in the circumferential direction.

**2.** Heating disk (1) according to Claim 1, **characterized in that** the stacks of layers (2, 21) are electrically insulated from one another.

**3.** Heating disk (1) according to either of the preceding claims, **characterized in that** the insulating region is formed by an air gap, or **in that** the insulating region (9) is formed by a ceramic insulation.

**4.** Heating disk (1) according to one of the preceding claims, **characterized in that** the contact strip (4, 20) is connected electrically conductively to up to three stacks of layers (2, 21), which are otherwise electrically insulated from one another.

5. Heating disk (1) according to Claim 4, **characterized in that** the up to five, preferably three, stacks of layers (2, 21) each have up to seven corrugated metal layers and have up to 8 smooth metal layers.

6. Heating disk (1) according to one of the preceding claims, **characterized in that** the contact strip (20) extends in the circumferential direction of the carrier shell (22), wherein a partial region (24) of the contact strip (20) is angled in relation to the central axis of the honeycomb body.

7. Heating disk (1) according to Claim 6, **characterized in that** the angled region (24) of the contact strip (20) is dimensioned such that the resonant frequency of the angled region (24) with values above 2500 Hz is in a range outside the oscillation frequencies of the exhaust system.

8. Heating disk (1) according to one of the preceding claims, **characterized in that** the feedthrough (5, 10) for the electrical contact structure through the carrier shell (6) has a cross section that tapers conically from the outside inward.

9. Heating disk (1) according to Claim 8, **characterized in that** the electrical contact structure is formed by an inner conductor (11), which is inserted in a receiving sleeve (12) penetrating the carrier shell, wherein the inner conductor (11) is spaced apart from the receiving sleeve (12) by an electrically insulating layer (14).

10. Heating disk (1) according to either of the preceding claims 8 and 9, **characterized in that** the inner conductor (11) and/or the receiving sleeve (12) have a conically tapering cross section.

11. Heating disk (1) according to one of the preceding claims, **characterized in that** the contact strip (4, 20) is connected to the elements that form the electrical contact structure and are fed through the carrier shell (6, 22) and is positioned relative to the carrier shell (6, 22) by these elements.

12. Heating disk (1) according to one of the preceding claims, **characterized in that** the contact strip is connected to the carrier shell in a mechanically fixed but electrically insulating manner in relation to the insulating layer by means of a metal/ceramic soldered connection.

13. Method for producing a catalytic converter with a heating disk (1) according to the preceding Claims 1 to 12, **characterized in that** the following steps are part of the method:

   - forming a bulge (8) in the carrier shell (6),
   - coating the bulge (8) with a ceramic insulating layer (9),
   - introducing the contact strip (4) into the region enclosed by the carrier shell (6),
   - soldering the stacks of layers (2) to the contact strip (4),
   - soldering or welding the electrical contact structure to the contact strip (4).

14. Method according to Claim 13, **characterized in that** the insulating layer (9) is subjected to a metallization.

15. Method according to either of the preceding Claims 13 and 14, **characterized in that** the inner conductor (11) and the receiving sleeve (12) are pressed together on the carrier shell.

**Revendications**

1. Plaque chauffante (1) pour le chauffage d'un courant de gaz d'échappement et/ou d'un composant pour le post-traitement de gaz d'échappement, comprenant un corps alvéolaire qui est enroulé à partir d'une pluralité de couches métalliques lisses et ondulées empilées les unes sur les autres, comprenant une enveloppe de support (6, 22), dans laquelle le corps alvéolaire est reçu, et comprenant un contact électrique, qui traverse l'enveloppe de support (6, 22) et par l'intermédiaire duquel le corps alvéolaire peut être relié à une source de courant, le contact électrique présentant, dans la zone entourée par l'enveloppe de support (6, 22), une bande de contact (4, 20) s'étendant dans la direction circonférentielle de l'enveloppe de support (6, 22), une zone d'isolation (9) étant formée entre l'enveloppe de support (6, 22) et la bande de contact (4, 20), une pluralité d'empilements de couches (2, 21) isolés électriquement les uns des autres, qui sont formés chacun d'une pluralité de couches métalliques lisses et de couches métalliques ondulées et qui sont agencés directement au voisinage les uns des autres, étant reliés de manière électriquement conductrice à la bande de contact (4, 20), **caractérisée en ce que** l'enveloppe de support (6) présente un renflement (8) orienté radialement vers l'extérieur, qui forme un réceptacle pour la bande de contact (4) s'étendant dans la direction circonférentielle.

2. Plaque chauffante (1) selon la revendication 1, **caractérisée en ce que** les empilements de couches (2, 21) sont isolés électriquement les uns des autres.

3. Plaque chauffante (1) selon l'une quelconque des revendications précédentes, **caractérisée en ce que** la zone d'isolation est formée par un espace d'air, ou **en ce que** la zone d'isolation (9) est formée par une isolation céramique.

4. Plaque chauffante (1) selon l'une quelconque des revendications précédentes, **caractérisée en ce que** la bande de contact (4, 20) est reliée de manière électriquement conductrice à jusqu'à trois empilements de couches (2, 21) par ailleurs isolés électriquement les uns des autres.

5. Plaque chauffante (1) selon la revendication 4, **caractérisée en ce que** les jusqu'à cinq, de préférence trois, empilements de couches (2, 21) présentent chacun jusqu'à sept couches métalliques ondulées et jusqu'à 8 couches métalliques lisses.

6. Plaque chauffante (1) selon l'une quelconque des revendications précédentes, **caractérisée en ce que** la bande de contact (20) s'étend dans la direction circonférentielle de l'enveloppe de support (22), une zone partielle (24) de la bande de contact (20) étant coudée par rapport à l'axe central du corps alvéolaire.

7. Plaque chauffante (1) selon la revendication 6, **caractérisée en ce que** la zone coudée (24) de la bande de contact (20) est dimensionnée de telle sorte que la fréquence de résonance de la zone coudée (24) se situe avec des valeurs supérieures à 2 500 Hz dans une plage située en dehors des fréquences de vibration du système d'échappement.

8. Plaque chauffante (1) selon l'une quelconque des revendications précédentes, **caractérisée en ce que** le passage (5, 10) pour le contact électrique à travers l'enveloppe de support (6) présente une section transversale se rétrécissant de manière conique de l'extérieur vers l'intérieur.

9. Plaque chauffante (1) selon la revendication 8, **caractérisée en ce que** le contact électrique est formé par un conducteur intérieur (11), qui est inséré dans une douille de réception (12) traversant l'enveloppe de support, le conducteur intérieur (11) étant espacé de la douille de réception (12) par une couche électriquement isolante (14).

10. Plaque chauffante (1) selon l'une quelconque des revendications 8 ou 9 précédentes, **caractérisée en ce que** le conducteur intérieur (11) et/ou la douille de réception (12) présentent une section transversale se rétrécissant de manière conique.

11. Plaque chauffante (1) selon l'une quelconque des revendications précédentes, **caractérisée en ce que** la bande de contact (4, 20) est reliée aux éléments formant le contact électrique et passant à travers l'enveloppe de support (6, 22) et est positionnée par ces éléments par rapport à l'enveloppe de support (6, 22).

12. Plaque chauffante (1) selon l'une quelconque des revendications précédentes, **caractérisée en ce que** la bande de contact est reliée à l'enveloppe de support au moyen d'une liaison brasée métal/céramique, de manière mécaniquement fixe mais électriquement isolante par rapport à la couche d'isolation.

13. Procédé de fabrication d'un catalyseur comprenant une plaque chauffante (1) selon les revendications 1 à 12 précédentes, **caractérisé en ce que** les étapes suivantes font partie du procédé :

   - la formation d'un renflement (8) dans l'enveloppe de support (6),
   - le revêtement du renflement (8) avec une couche d'isolation céramique (9),
   - l'introduction de la bande de contact (4) dans la zone entourée par l'enveloppe de support (6),
   - le brasage de l'empilement de couches (2) avec la bande de contact (4),
   - le brasage ou le soudage du contact électrique avec la bande de contact (4).

14. Procédé selon la revendication 13, **caractérisé en ce que** la couche d'isolation (9) est chargée avec une métallisation.

**15.** Procédé selon l'une quelconque des revendications 13 ou 14 précédentes, **caractérisé en ce que** le conducteur intérieur (11) et la douille de réception (12) sont pressés l'un contre l'autre sur l'enveloppe support.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 0490222 A1